# FASCICULE DE BREVET EUROPEEN

(11) **EP 3 199 853 B1**
(45) Date de publication et mention de la délivrance du brevet: **12.09.2018**
(21) Numéro de dépôt: 16000227.5
(22) Date de dépôt: 29.01.2016
(51) Int. Cl.: E03D 11/14, F16L 5/02, E03C 1/02

(54) **DISPOSITIF POUR SCELLER DES SORTIES DE ROBINETTERIE AVEC DU PLÂTRE ET DESTINÉ À ÊTRE UTILISÉ SUR DES CLOISONS DE PLAQUES DE PLÂTRE**
VORRICHTUNG ZUM VERSIEGELN DER AUSGÄNGE VON ARMATUREN MIT GIPS ZUR VERWENDUNG IN GIPSKARTONWÄNDEN
DEVICE FOR SEALING VALVE OUTLETS WITH PLASTER, INTENDED FOR BEING USED ON PLASTERBOARD PARTITIONS

(43) Date de publication de la demande: 02.08.2017
(73) Titulaire: Martin, William, 59193 Erquinghem/Lys (FR)
(72) Inventeur: Martin, William, 59193 Erquinghem/Lys (FR)

(56) Documents cités:
- DE-A1-102013 011 437
- DE-C1- 3 909 030
- DE-U1-202009 007 862
- FR-A1- 3 025 280
- US-A- 6 108 830

## Description

La présente invention concerne un dispositif pour sceller des sorties de robinetterie dans les cloisons de plaques de plâtre. DE 102013011437A1 divulgue un passage d'un câble ou d'un tuyau traversant une cloison. A l'extérieur de cette cloison, une cloche transparente est remplie par injection de mastic et non de plâtre pour réaliser une étanchéité et non un scellement. Ce dispositif consiste en fait en une rosace remplie de mastic pour réaliser l'étanchéité d'une traversée de câble ou de tuyau sortant d'un mur ou d'une cloison. Il ne sert pas à maintenir un coude de plomberie par son taraudage avec l'aide d'une bobine filetée et d'un écrou le temps d'y injecter du plâtre. Le mastic injecté dans la rosace à l'extérieur de la cloison forme une masse encombrante qui empêche la pose d'un revêtement mural (carrelage, faïence, etc.) et d'une robinetterie murale. Pour installer des robinets en sortie de cloison, il faut d'abord fixer le raccord coudé qui est installé en fin de tuyauterie et qui descend dans la cloison pour amener l'eau. Actuellement, la fixation du raccord coudé est effectuée avec un kit de fixation comprenant une plaque qui reste définitivement sur la cloison. Elle est fixée dans les angles à l'aide de chevilles et vis et au centre, soit par des vis à bouts ronds, soit par des clips. La plaque restera visible si la cloison n'est pas carrelée ensuite. Si la cloison est destinée à être carrelée, les carreleurs seront gênés par les méthodes de fixation centrales actuelles : vis ou clips, qui ne peuvent être retirés car ils maintiennent le raccord coudé.

Le dispositif selon l'invention, tel que défini par la revendication 1, permet de pallier à ces inconvénients. En effet, il comporte, selon une première caractéristique, une plaque en plastique transparent qui n'est pas à fixer définitivement dans la cloison.

Il comporte, selon une deuxième caractéristique, une bobine filetée équipée d'un écrou taraudé passant par un orifice centré vers le bas de la plaque et s'adaptant au raccord coudé qui sort de la cloison. En vissant ces embouts les uns avec les autres, ils assureront la fixation provisoire du dispositif permettant d'injecter du plâtre. Aucun moyen apparent de fixation ne sera donc nécessaire.

Il comporte, selon une caractéristique, optionnelle un orifice situé en haut de la plaque par lequel passe une vis à plâtre. Une fois vissée à la cloison, la plaque sera maintenue à plat sur la cloison. Cette vis sera retirée lors du démontage du dispositif.

Il comporte, selon une autre caractéristique, un orifice dans la plaque pour injecter le plâtre. Au bout de deux heures environ, le plâtre aura pris et le dispositif pourra être dévissé. Seul apparaîtra alors l'extrémité du raccord coudé du tuyau entouré de plâtre. Aucune vis ou clips ne viendra empêcher le travail des carreleurs par la suite. Si la plaque de plâtre n'est pas carrelée, aucun dispositif n'apparaîtra.

Les dessins annexés illustrent l'invention :

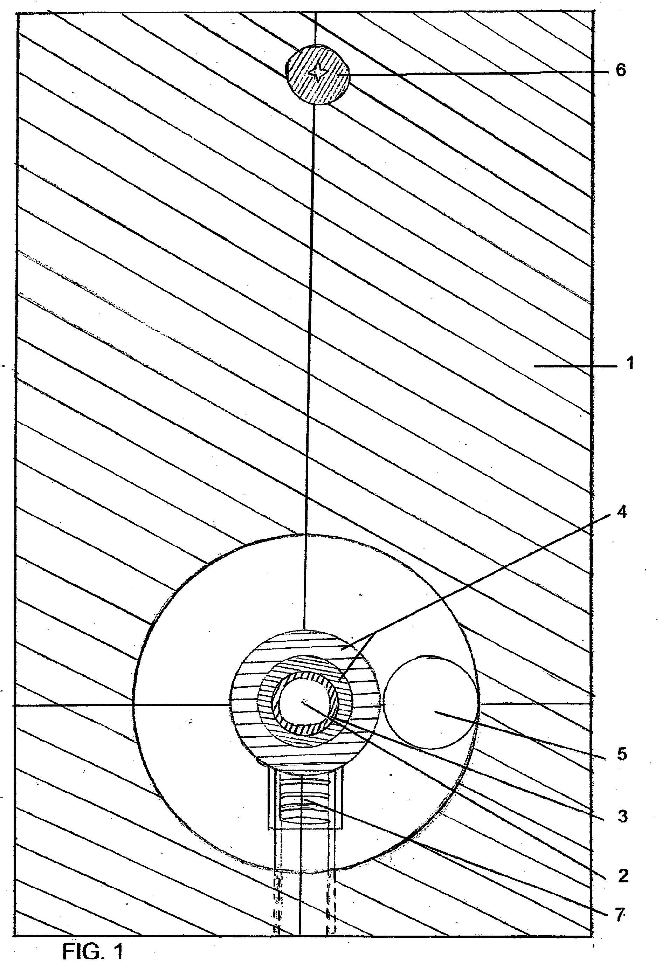

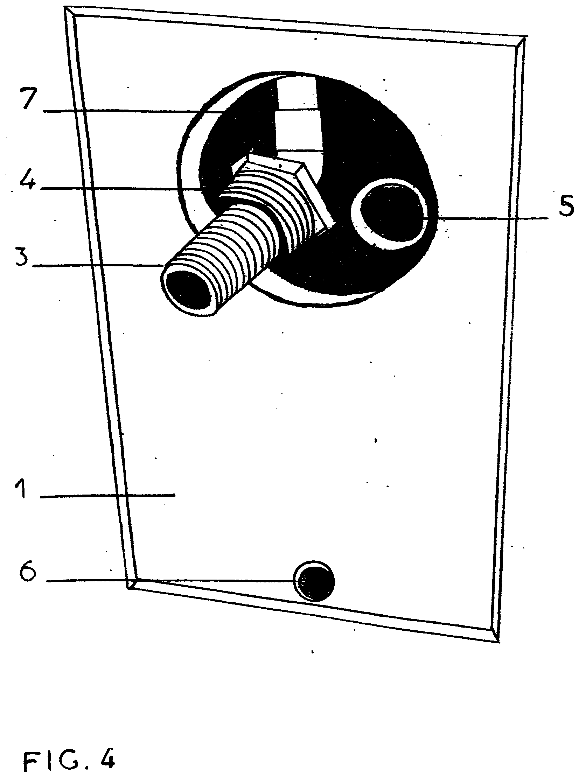

La figure 1 et la figure 4 représentent une vue de dessus du dispositif de l'invention.

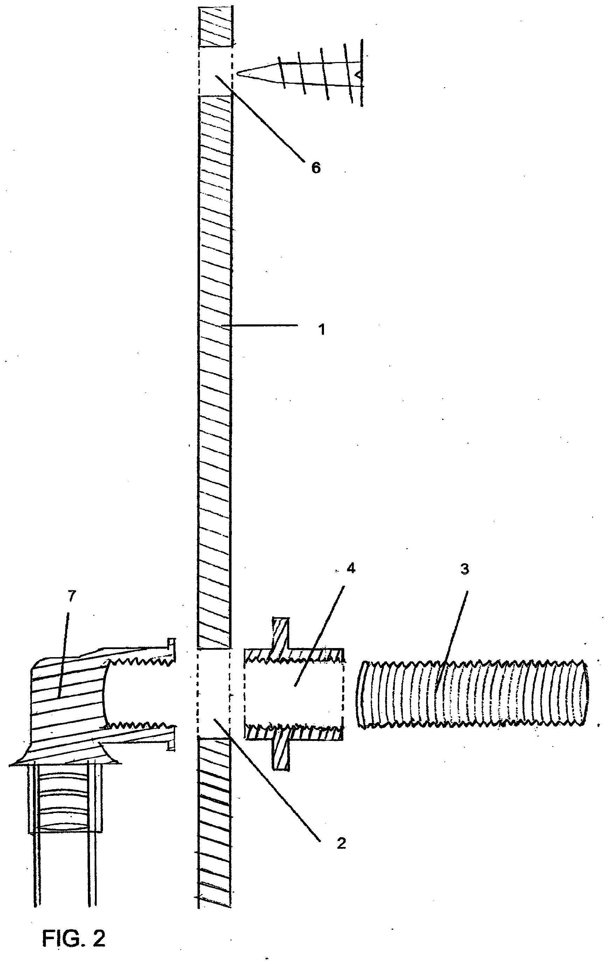

La figure 2 représente une vue éclatée du dispositif de l'invention.

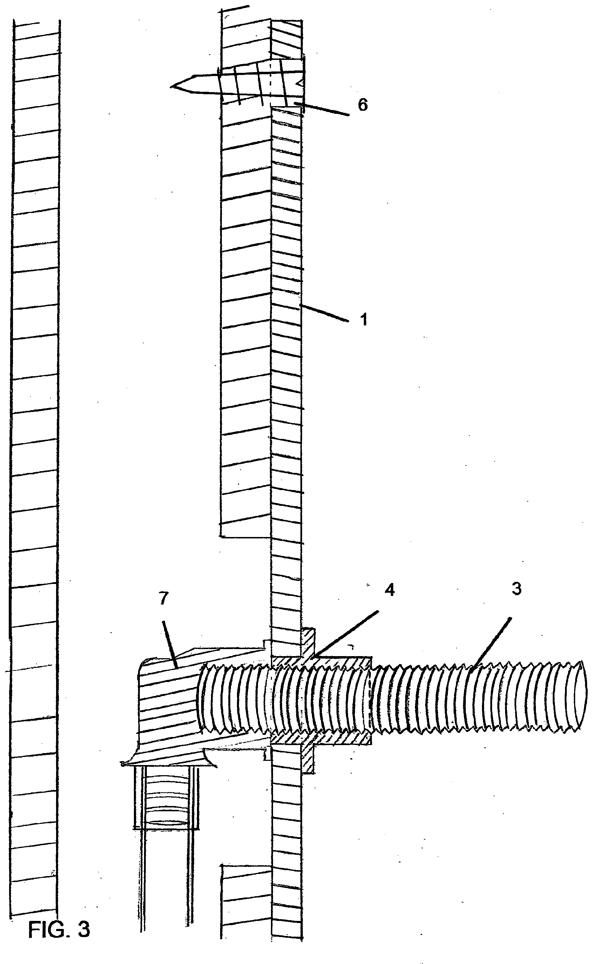

La figure 3 représente la coupe de l'assemblage du dispositif de l'invention sur une cloison.

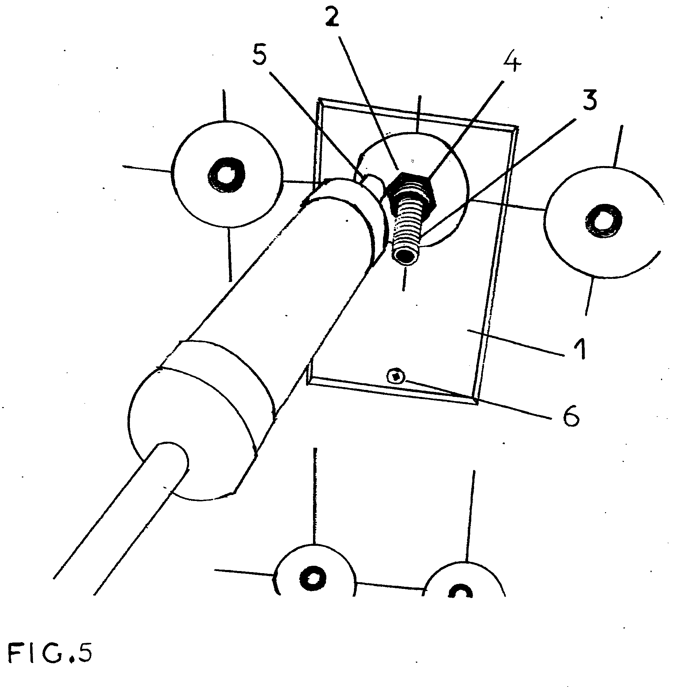

La figure 5 représente une vue d'ensemble du dispositif posé ainsi que l'injection du plâtre effectué à l'aide d'une pompe.

En référence à ces dessins, le dispositif comporte une plaque (1) en plastique transparent de type plexiglas de longueur de 250 mm, de largeur de 150 mm et d'épaisseur de 8 mm avec un orifice (2) situé vers le bas et centré de diamètre de 24 mm. Deux traits sont dessinés : l'un vertical et centré, l'autre horizontal et passant au niveau du centre de l'orifice (2). Ces tracés peuvent alors coïncider par transparence avec ceux que les plombiers tirent sur la cloison pour préparer l'installation des sorties.

Une bobine filetée (3) avec un pas de vis de 15/21 et d'une longueur de 100 mm passe par l'orifice (2) de la plaque (1) et se visse au raccord coudé (7) qui sort de la cloison. Le serrage est finalisé par l'écrou taraudé (4) placé sur la bobine filetée (3). Ces manoeuvres de vissage s'effectuent à la main. L'écrou taraudé (4) présente une diminution d'épaisseur au deux tiers de sa longueur. La partie affinée rentre dans l'orifice centré (2) tandis que la partie plane et élargie s'applique sur le dessus de la plaque (1), assurant ainsi l'équerrage du raccord coudé (7) dans la cloison.

Pour que la plaque (1) soit maintenue à plat sur la cloison, elle est fixée avec une vis à plâtre qui passe par un orifice centré (6) vers le haut.

La plaque (1) est alors fixée provisoirement sur la cloison. Le plâtre peut être injecté jusqu'au niveau de la plaque (1) par l'orifice (5) de diamètre de 24 mm situé juste à proximité de l'orifice centré (2). On place l'orifice (5) selon la disposition du tuyau dans la cloison. Si le tuyau vient du bas, on injecte le plâtre par l'orifice placé vers le bas ; la plaque (1) est vissée par le haut. Si le tuyau vient du haut, on place l'orifice vers le haut pour injecter le plâtre et la plaque (1) est vissée par le bas.

Le travail d'injection du plâtre est facilité grâce à la matière transparente de la plaque (1). En effet, on voit parfaitement le niveau de remplissage du plâtre à travers celle-ci. Pour l'injection du plâtre, on utilise une pompe, par exemple : une pompe pour déboucher les toilettes dont on a enlevé l'embout.

Après 2 heures minimum, le plâtre a pris et la plaque (1) peut être dévissée pour être réutilisée.

Sur la cloison, seul est apparent l'orifice pratiqué dans celle-ci contenant l'extrémité du raccord coudé (6) entouré de plâtre.

Concernant l'orifice de la cloison, il doit être de diamètre minimum de 90 mm pour qu'il coïncide avec l'orifice (6) qui sert à injecter le plâtre. Ce diamètre permet également aux plombiers de passer les doigts pour ajouter de la laine de verre.

Concernant les cloisons, elles sont généralement isolées avec de la laine de verre.

Cela ne gêne en rien l'injection du plâtre dans la cloison ; au contraire, la laine de verre constitue une barrière empêchant le plâtre de tomber avant qu'il ne prenne. Les plombiers doivent d'ailleurs en rajouter par l'orifice de la cloison, qu'il en manque ou non, pour être assurés que le plâtre restera en place. Il suffit qu'ils en enfoncent vers le bas, à gauche et à droite, à quelques centimètres de l'orifice pour former un «moule».

Concernant le plâtre, il doit être de consistance crémeuse de façon à pouvoir l'aspirer sans difficulté et à le réinjecter dans l'orifice de la cloison sans qu'il dégueule. Pour faciliter le pompage, il vaut mieux placer le plâtre préparé dans un seau assez haut (éviter tout récipient plat qui risquerait de provoquer des prises d'air lors de l'aspiration du plâtre). La pompe doit être nettoyée en aspirant plusieurs fois de l'eau disposée dans un seau. Elle pourra ainsi être réutilisée.

Concernant les tuyaux et raccords coudés, il en existe plusieurs modèles. Le dispositif s'adapte parfaitement quelque soit le type ou la taille de ceux-ci.

Le dispositif selon l'invention est particulièrement destiné aux plombiers qui fixent des sorties dans les cloisons de plaques de plâtre pour poser ensuite de la robinetterie.

## Revendications

1. Dispositif réutilisable pour maintenir et sceller par injection de plâtre des sorties de robinetterie dans des cloisons de plaques de plâtre. Le dispositif comportant :
- une plaque (1) transparente pour voir le niveau de remplissage du plâtre,
- une bobine filetée (3), et
- un écrou (4) ;
dans lequel la plaque (1) comprend au moins:
- un orifice (2) par lequel on peut introduire la bobine filetée (3) dont une extrémité se visse pour maintenir un coude de plomberie (7) par son taraudage et dont l'autre extrémité sert à visser manuellement l'écrou (4) pour appliquer ladite plaque (1) contre ledit coude de plomberie (7) ;
- un orifice (5) par lequel on peut injecter du plâtre pour noyer ledit coude de plomberie (7) incorporé dans ladite cloison et par lequel on peut contrôler manuellement la solidification dudit plâtre pour procéder au démontage du dispositif et obtenir un scellement de sortie de robinetterie.

2. Dispositif selon la revendication 1 dans lequel la plaque (1) comprend au moins un orifice (6) par lequel on peut visser ladite plaque (1) sur une cloison de plaques de plâtre incorporant ledit coude de plomberie (7).

## Patentansprüche

1. Wiederverwendbare Vorrichtung, um durch Gipseinspritzung Rohrausgänge in Gipsplattenwänden zu stützen und zu befestigen, die Vorrichtung besteht aus :
- einer durchsichtigen Platte (1), um den Füllstand des Gipses zu zehen,
- einer gewindeten Spule (3), und
- einer Mutter (4) ;
in der die Platte (1) mindestens besteht aus :
- einem Loch (2) durch das die gewindete Spule (3), deren eine Extremität geschraubt wird um ein Wasserleitungsknie (7) durch ihr Innengewinde zu stützen, eingeführt werden kann, und deren andere Extremität dazu dient, von Hand die Mutter (4) festzuschrauben um die besagte Platte (1) an dem besagten Wasserleitungsknie zu befestigen (7) ;
- einem Loch(5) durch das Gips eingespritzt werden kann, um das besagte eingebaute Wasserleitungsknie (7) in der besagten Wand völlig einzubetten und durch das von Hand das Festwerden des besagten Gipses kontrolliert werden kann, um das Ausbauen der Vorrichtung vorzunehmen und ein Eingipsen des Rohrausgangs zu erhalten.

2. Vorrichtung gemäß Anspruch 1 in der die Platte (1) mindestens ein Loch (6) aufweist, durch das die besagte Platte (1) auf eine Gipsplattenwand geschraubt werden kann und wo das besagte Wasserleitungsknie (7) eingebaut wird.

## Claims

1. A reusable device using the injection of plaster to retain and seal sanitary fittings in plasterboard partitions; the device comprising :
- a transparent plate (1) to view the plaster filling level,
- a threaded coil (3), and
- a nut (4) ;
wherein the plate (1) comprises at least:
- an orifice (2) through which one can insert the threaded coil (3), one end of which is screwed on to the thread of an elbow pipe (7) to hold it in place, and the other end of which is used to manually screw on the nut (4) to apply said plate (1) against said elbow pipe (7) ;
- an orifice (5) through which plaster can be injected for embedding said elbow pipe (7) incorporated in said partition and by which the setting of said plaster can be manually controlled in order to disassemble the device and seal the outlet for the sanitary fittings.

2. Device according to claim 1 wherein the plate (1) comprises at least one orifice (6) through which said plate (1) can be screwed onto a plasterboard wall incorparating said elbow pipe (7).
